(19) Europäisches Patentamt
European Patent Office
Office européen des brevets

(11) EP 4 648 465 A1

(12) **EUROPEAN PATENT APPLICATION**

(43) Date of publication:
**12.11.2025 Bulletin 2025/46**

(21) Application number: **25172868.9**

(22) Date of filing: **28.04.2025**

(51) International Patent Classification (IPC):
*H04W 24/04* (2009.01)    *G06N 20/00* (2019.01)
*H04L 41/0631* (2022.01)    *H04L 41/16* (2022.01)
*H04W 24/08* (2009.01)    *H04W 24/10* (2009.01)

(52) Cooperative Patent Classification (CPC):
**H04W 24/04; G06N 20/00; H04L 41/0631;
H04L 41/147; H04L 41/16;** H04W 24/08;
H04W 24/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **07.05.2024  IN 202421036174**

(71) Applicant: **Tata Consultancy Services Limited
Mumbai, Maharashtra 400 021 (IN)**

(72) Inventors:
• **YADAV, Indu
560066 Bangalore, Karnataka (IN)**

• **SUMAN, Santan
560066 Bangalore, Karnataka (IN)**
• **MISHRA, Garima
560066 Bangalore, Karnataka (IN)**
• **RATH, Hemant Kumar
751024 Bhubaneswar, Odisha (IN)**
• **MENON, Muralidharan Sadanand
600042 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR NETWORK FAULT MANAGEMENT BY PREDICTING AVERAGE RATE AT FAULTY BASE STATION**

(57)    This disclosure relates generally to a method and system for network fault management. Conventionally, faults are analyzed by setting rules based on network experts' experience, such as duration of faults or predefined categories of faults, to determine which faults need to be handled with higher priority. The present disclosure addresses these problems through a method of performing network fault management at a faulty base station using a timeseries forecasting model coupled with a clustering algorithm. The time series forecasting model considers a plurality of network parameters received from a plurality of base stations serving at least one user equipment (UE) and trains the model to predict an average data rate at the faulty BS. Further the model receives the network parameters for a cluster comprising the faulty BS and re-trains itself. Finally, the model prioritizes the faults based on decreased average data rate of the UE at the faulty BS.

FIG. 3

EP 4 648 465 A1

**Description**

CROSS-REFERENCE TO RELATED APPLICATIONS AND PRIORITY

The present application claims priority from Indian patent application no. 202421036174, filed on May 07, 2024.

TECHNICAL FIELD

The disclosure herein generally relates to telecommunication networks and, more particularly, to systems and methods for predicting faults in the telecommunication networks.

BACKGROUND

Networks are the backbone of every business. Even in small or enterprise-level businesses, the loss of productivity during a network outage can result in hefty damages. To handle such network outages due to faulty network, telecommunication network service providers detect, identify, and troubleshoot connectivity and/or network performance issues at the earliest to support end-to-end connectivity to the users. The fault management in a network can be categorized into multiple processes such as fault monitoring, analysis, diagnosis, and repair or maintenance process. The identification of impact of a fault plays a crucial role in efficient operation and management of a network. Conventionally, the fault diagnosis for networks is performed by human experts. However, such manual diagnosis becomes much less feasible due to the growing complexity of wireless networks. Further, automatic fault management referred as self-healing is another solution for Self-Organizing Networks (SONs) to mitigate and recover from failures of problematic cells. Most of the related works in fault management revolves around the fault diagnosis or prediction in SON. This involves learning based self-healing system for self-organizing heterogeneous network. All the existing works focus on intelligent fault detection which lead to equipment-centric approaches to identify and resolve the faults in a wireless network. The major concern of any equipment-centric approach is that it does not consider or analyze the impact of faults in the network. Hence, all the faults are given equal weightage while repairing. In the densely deployed heterogeneous network, all the faults do not have same kind of impact on user performance and equal weightage to all the fault without prioritizing the faults does not aid the network operator to manage the network efficiently.

SUMMARY

Embodiments of the present disclosure present technological improvements as solutions to one or more of the above-mentioned technical problems recognized by the inventors in conventional systems. For example, in one embodiment, a method for network fault management at base stations (BSs) is provided. The method includes obtaining, via one or more hardware processors, a global model for a region of interest comprising a plurality of base stations (BSs), wherein the global model is generated by a time series forecasting model by processing time-stamped dataset acquired for the plurality of BSs. In the region of interest, a plurality of BSs exist, and each base station serves a plurality of user/ user equipment (UE). The network operators provide seamless QoS to the UE and utilize neighboring BSs to manage the load on the network. However, fault at one BS severely affects the neighboring BSs and hence effective fault management is essential. The time series forecasting models make the predictions using the historical time-stamped data. The time-stamped data once received from the plurality of BSs, is taken through pre-processing phase to transform the raw data collected from the real network to a machine learning model compatible format so as to be fed into the machine learning framework. The method further includes, detecting, via the one or more hardware processors, a faulty base station (BS) from among the plurality of BSs based on a plurality of network parameters acquired from the time-stamped data of each BS, wherein at least one user equipment (UE) is connected to the faulty BS. The plurality of network parameters involved in the fault detection includes access Success Rate (ASR), resource utilization rate, timing advance (TA), block error rate (BLER), modulation and coding scheme (MCS), and channel quality indicator (CQI). Based on abnormality or a deviation from the normal values of above-mentioned network parameters, faulty BS is identified among the plurality of BSs within a region. The method further includes, clustering, via the one or more hardware processors, the faulty BS, and a plurality of neighboring BSs from among the plurality of BSs to form a cluster, and wherein the neighboring BSs performing load sharing with the faulty BS are prone to be affected due to the faulty BS. Clustering is done by segregating the faulty BS and the neighboring BSs together in the region of interest to form a cluster. The neighboring BSs performs load sharing with the faulty BS in routine scenarios and are prone to be affected due to the fault, if arises in one of the BS of the cluster. All the BSs are segregated into clusters comprising a sub-set of the plurality of BSs falling within the region of interest. The method further includes obtaining, via the one or more hardware processors, a local model for the cluster by re-training the global model on a cluster-wise dataset comprising the plurality of network parameters associated with BSs of the cluster. The global model thus obtained is further retrained with the data corresponding to BSs in cluster map. This retraining on local information serves the purpose of taking the local patterns of the fault into account while making predictions. The local model is thus obtained by re-training the global model on the local information specific to the cluster. The method further includes predicting, via the one or more hardware processors, average data rate of the UE connected to the faulty BS station by combining the global model and the local model, wherein the combined model scrutinize one or more network parameters from among the plurality of network parameters affecting the average data rate of UE in the cluster comprising the faulty BS. The combined model capable of making predictions based on network pattern identification of the region of interest via global model and cluster via local model predicts the average data rate. The method further includes calculating, via the one or more hardware processors, change in the average data rate of the UE served by the faulty BS based on the predicted average data rate, wherein the change in average data rate is calculated each predefined time interval of a fault duration. The combined model predicts the average data rate. Based on the predicted average data rate thus obtained, status of the average data rate change for each hour of the fault duration is calculated. The method further includes, performing, via the one or more hardware processors, fault management by prioritizing the UE from a high priority category to a low priority category, wherein the UE placed in high priority category is identified with decreased average data rate based on plurality of network parameters affecting the faulty BS. The status of the average data rate change is measured for each hour of the fault duration. Based on average data rate change, the information about the impact of fault on the user services is utilized to decide which fault should be handled in priority.

In another aspect, a system for a network fault management is provided. The system includes at least one memory storing programmed instructions; one or more Input /Output (I/O) interfaces; and one or more hardware processors, a network fault management model comprising data collection module, machine learning module and prioritization module, operatively coupled to a corresponding at least one memory, wherein the system is configured to obtaining, via one or more hardware processors, a global model for a region of interest comprising a plurality of base stations (BSs), wherein the global model is generated by a time series forecasting model by processing time-stamped dataset acquired for the plurality of BSs. In the region of interest, a plurality of BSs exist, and each base station serves a plurality of user/ user equipment (UE). The network operators provide seamless QoS to the UE and utilize neighboring BSs to manage the load on the network. However, fault at one BS severely affects the neighboring BSs and hence effective fault management is essential. The time series forecasting models make the predictions using the historical time-stamped data. The time-stamped data once received from the plurality of BSs, is taken through pre-processing phase to transform the raw data collected from the real network to a machine learning model compatible format so as to be fed into the machine learning framework. Further, the system is configured to detect, via the one or more hardware processors, a faulty base station (BS) from among the plurality of BSs based on a plurality of network parameters acquired from the time-stamped data of each BS, wherein at least one user equipment (UE) is connected to the faulty BS. The plurality of network parameters involved in the fault detection includes access Success Rate (ASR), resource utilization rate, timing advance (TA), block error rate (BLER), modulation and coding scheme (MCS), and channel quality indicator (CQI). Based on abnormality or a deviation from the normal values of above-mentioned network parameters, faulty BS is identified among the plurality of BSs within a region. Further, the system is configured to cluster, via the one or more hardware processors, the faulty BS, and a plurality of neighboring BSs from among the plurality of BSs to form a cluster, and wherein the neighboring BSs performing load sharing with the faulty BS are prone to be affected due to the faulty BS. Clustering is done by segregating the faulty BS and the neighboring BSs together in the region of interest to form a cluster. The neighboring BSs performs load sharing with the faulty BS in routine scenarios and are prone to be affected due to the fault, if arises in one of the BS of the cluster. All the BSs are segregated into clusters comprising a sub-set of the plurality of BSs falling within the region of interest. Further, the system is configured to obtain, via the one or more hardware processors, a local model for the cluster by re-training the global model on a cluster-wise dataset comprising the plurality of network parameters associated with BSs of the cluster. The global model thus obtained is further retrained with the data corresponding to BSs in cluster map. This retraining on local information serves the purpose of taking the local patterns of the fault into account while making predictions. The local model is thus obtained by re-training the global model on the local information specific to the cluster. Further, the system is configured to predict, via the one or more hardware processors, average data rate of the UE connected to the faulty BS station by combining the global model and the local model, wherein the combined model scrutinize one or more network parameters from among the plurality of network parameters affecting the average data rate of UE in the cluster comprising the faulty BS. The combined model capable of making predictions based on network pattern identification of the region of interest via global model and cluster via local model predicts the average data rate. Further, the system is configured to calculate, via the one or more hardware processors, change in the average data rate of the UE served by the faulty BS based on the predicted average data rate, wherein the change in average data rate is calculated each predefined time interval of a fault duration. The combined model predicts the average data rate. Based on the predicted average data rate thus obtained, status of the average data rate change for each hour of the fault duration is calculated. Further, the system is configured to perform, via the one or more hardware processors, fault management by prioritizing the UE from a high priority category to a low priority category, wherein the UE placed in high priority category is identified with decreased average data rate based on plurality of network parameters affecting the faulty BS. The status of the average data rate change is measured for each hour of the fault duration. Based on average data rate change, the information about the impact of fault on the user services is utilized to decide which fault should be handled in priority.

In yet another aspect, a computer program product including a non-transitory computer-readable medium having embodied therein a computer program for network fault management is provided. The computer readable program, when executed on a computing device, causes the computing device to obtain a global model for a region of interest comprising a plurality of base stations (BSs), wherein the global model is generated by a time series forecasting model by processing time-stamped dataset acquired for the plurality of BSs. In the region of interest, a plurality of BSs exist, and each base station serves a plurality of user/ user equipment (UE). The network operators provide seamless QoS to the UE and utilize neighboring BSs to manage the load on the network. However, fault at one BS severely affects the neighboring BSs and hence effective fault management is essential. The time series forecasting models make the predictions using the historical time-stamped data. The time-stamped data once received from the plurality of BSs, is taken through pre-processing phase to transform the raw data collected from the real network to a machine learning model compatible format so as to be fed into the machine learning framework. The computer readable program, when executed on a computing device, causes the computing device to detect, via the one or more hardware processors, a faulty base station (BS) from among the plurality of BSs based on a plurality of network parameters acquired from the time-stamped data of each BS, wherein at least one user equipment (UE) is connected to the faulty BS. The plurality of network parameters involved in the fault detection includes access Success Rate (ASR), resource utilization rate, timing advance (TA), block error rate (BLER), modulation and coding scheme (MCS), and channel quality indicator (CQI). Based on abnormality or a deviation from the normal values of above-mentioned network parameters, faulty BS is identified among the plurality of BSs within a region. The computer readable program, when executed on a computing device, causes the computing device to cluster the faulty BS, and a plurality of neighboring BSs from among the plurality of BSs to form a cluster, and wherein the neighboring BSs performing load sharing with the faulty BS are prone to be affected due to the faulty BS. Clustering is done by segregating the faulty BS and the neighboring BSs together in the region of interest to form a cluster. The neighboring BSs performs load sharing with the faulty BS in routine scenarios and are prone to be affected due to the fault, if arises in one of the BS of the cluster. All the BSs are segregated into clusters comprising a sub-set of the plurality of BSs falling within the region of interest. The computer readable program, when executed on a computing device, causes the computing device to obtain a local model for the cluster by re-training the global model on a cluster-wise dataset comprising the plurality of network parameters associated with BSs of the cluster. The global model thus obtained is further retrained with the data corresponding to BSs in cluster map. This retraining on local information serves the purpose of taking the local patterns of the fault into account while making predictions. The local model is thus obtained by re-training the global model on the local information specific to the cluster. The computer readable program, when executed on a computing device, causes the computing device to predict, via the one or more hardware processors, average data rate of the UE connected to the faulty BS station by combining the global model and the local model, wherein the combined model scrutinize one or more network parameters from among the plurality of network parameters affecting the average data rate of UE in the cluster comprising the faulty BS. The combined model capable of making predictions based on network pattern identification of the region of interest via global model and cluster via local model predicts the average data rate. The computer readable program, when executed on a computing device, causes the computing device to calculate, via the one or more hardware processors, change in the average data rate of the UE served by the faulty BS based on the predicted average data rate, wherein the change in average data rate is calculated each predefined time interval of a fault duration. The combined model predicts the average data rate. Based on the predicted average data rate thus obtained, status of the average data rate change for each hour of the fault duration is calculated. The computer readable program, when executed on a computing device, causes the computing device to perform, via the one or more hardware processors, fault management by prioritizing the UE from a high priority category to a low priority category, wherein the UE placed in high priority category is identified with decreased average data rate based on plurality of network parameters affecting the faulty BS. The status of the average data rate change is measured for each hour of the fault duration. Based on average data rate change, the information about the impact of fault on the user services is utilized to decide which fault should be handled in priority.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of system 100 for fault management at Base Stations (BSs) in a network for providing seamless network experience to the user, according to some embodiments of the present disclosure.

FIG. 2 is a diagram that illustrates an example of a practical scenario with 4G and 5G BSs deployed in a region of interest, according to some embodiments of the present disclosure.

FIG. 3 is a flow diagram illustrating network fault prediction model performing fault management through prioritization, according to some embodiments of the present disclosure.

FIGS. 4A and 4B are flow diagrams of an illustrative method for fault management by predicting average data rate at the faulty base station, according to some embodiments of the present disclosure.

FIG. 5 depicts data rate prediction using a time series model, Seasonal Autoregressive Integrated Moving-Average with Exogenous Regressors (SARIMAX), according to some embodiments of the present disclosure.

FIG. 6 depicts data rate prediction using a time series model, Long Short-Term Memory networks (LSTM), according to some embodiments of the present disclosure.

FIG. 7 depicts data rate prediction using a combined model that utilizes LSTM and clustering together, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As used herein the term "exemplary" is used herein to mean "serving as an example, instance, or illustration." Any implementation described herein as "exemplary" is not necessarily to be construed as preferred or advantageous over other implementations.

As used herein the terms 'network', 'telecommunication network', 'cellular network' and 'wireless network' are interchangeably used throughout the draft and mean a wireless network of a carrier associated with a wireless device and/or subscription on a wireless device, and/or its roaming partners.

As used herein the terms "wireless device," and "wireless communications device" are used interchangeably herein to refer to any one or all of cellular telephones, smart phones, personal or mobile multi-media players, personal data assistants (PDAs), laptop computers, tablet computers, smart books, palm-top computers, wireless electronic mail receivers, multimedia Internet enabled cellular telephones, wireless gaming controllers, and similar personal electronic devices that include a programmable processor and memory and circuitry for establishing wireless communication pathways and transmitting/receiving data via wireless communication pathways.

As used herein the terms "user," "user equipment (UE)", "subscriber," "customer," "consumer," "prosumer," "agent," and the like are employed interchangeably throughout the subject specification, unless context warrants particular distinction(s) among the terms. It should be appreciated that such terms can refer to human entities or automated components (e.g., supported through artificial intelligence, as through a capacity to make inferences based on complex mathematical formalisms), that are using the network and its associated services.

As used herein the terms "user equipment (UE)," "mobile station," "mobile," subscriber station," "subscriber equipment," "access terminal," "terminal," "handset," and similar terminology, refer to a wireless device utilized by a subscriber or user of a wireless communication service to receive or convey data, control, voice, video, sound, gaming, or substantially any data-stream or signaling-stream.

In next generation networks, the advancements in technology not only provide upgradation in terms of Quality of Service (QoS) parameters such as data rate, latency, reliability but also introduce a new set of use cases and services. The evolution of networks towards Sixth Generation (6G) and later are becoming increasingly complex and demanding, which necessitates constant monitoring, automation, and intelligence to provide seamless and reliable network services. Fault in a network is defined as the condition of the system that results in degradation in the QoS due to malfunction in the devices, software bugs, etc. Fault management plays a vital role in ensuring the stable network and services. Fault analysis is an essential process in fault management. Typically, fault analysis involves devising rules or policies based on pre-defined fault categories, to determine which fault should be handled with priority and what or how many resources are required to resolve the fault. However, the existing solutions lacks this aspect considering the enhancements in next generation networks. The identification of impact of a fault plays a crucial role in efficient operation and management of a network. Conventionally, a service provider has limited resources, which necessitates the proper assessment of the fault impact to ensure the optimal and efficient usage of resources to ensure reliability of network services. Moreover, in case of multiple faults in a network, the faults should be handled based on their impact on user services. Consider a heterogeneous network deployed by a service provider where multiple base stations (BSs) provide multiple layers of coverage (e.g., co-existence of 4G and 5G, multiple frequency bands). A user can be associated with one or more BSs. The service providers keep a check on the user QoS requirements such as data rate in order to satisfy the service level agreements (SLA). Suppose a BS is out of service due to a sudden fault; however the associated users can be served by migrating to neighboring BSs with enough resources and thus, maintain the desired QoS. In this case, the fault can be handled with low priority as services are not getting affected because of the fault and focus on other faults where the services are impacted. Thus, the resources can be utilized in fixing the high priority faults, which may lead to complaints and user (subscriber) churn. Therefore, fault impact analysis in a network can help in fault prioritization leading to efficient operation and management of access network.

Therefore, in the present disclosure, to better guide fault management and optimally allocating the limited operation and management resources, machine learning (ML) approach is adopted to predict the impact of faults on Radio Access Network (RAN) parameters. The transition of operation and management from equipment-centric to service-centric is disclosed in the proposed invention for autonomy of next generation networks. The disclosure involves ML framework to analyze the impact of fault on the data rate of the user equipment (UE) in next generation networks by predicting the data rate. The solution is focused on to enable the service-centric fault management in next-generation networks.

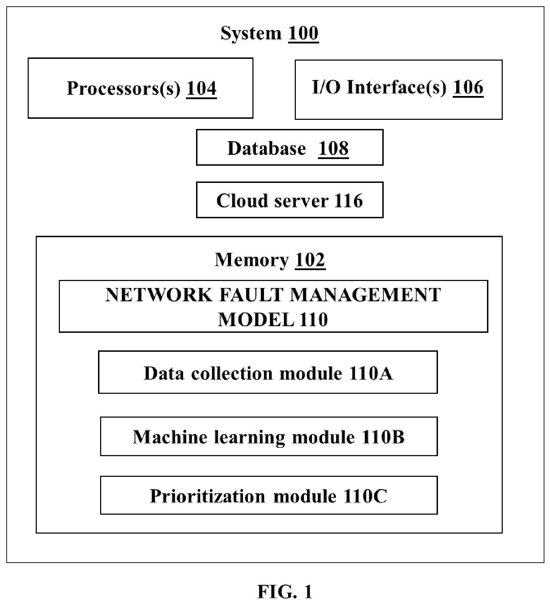

Referring now to the drawings, and more particularly to FIG. 1 through FIG. 7, where similar reference characters denote corresponding features consistently throughout the figures, there are shown preferred embodiments, and these embodiments are described in the context of the following exemplary system and/or method.

FIG. 1 illustrates an exemplary block diagram of a system 100 for fault management at the base stations for providing seamless network experience to the user, according to some embodiments of the present disclosure.

In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, system 100 can be implemented in a variety of computing systems, such as, laptop computers, notebooks, hand-held devices, workstations, mainframe computers, servers, a network cloud, and the like. The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices such as the user terminals enabling user to communicate with system via the chat bot UI or enabling devices to connect with one another or to another server. The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, memory 102 may include a database or repository. Memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. The memory 102, further include a network fault prediction model 110 which comprises a data collection module 110A, machine learning module 110B, and prioritization module 110C. The data collection module 110A receives a time-stamped data from a plurality of base stations (BSs). In a heterogeneous network scenarios there can be as many as above 500 4G BSs and also few 5G BSs. The time-stamped data comprises a plurality of network parameters, fault duration (in seconds) and the distance of a faulty BS from the neighboring BSs which is termed as Relation on an hourly basis from a deployed network. The data collection module 110A splits the data into two sets: one to train the model and the other set to test the efficacy of the proposed machine learning model. The data set does not provide the explicit knowledge of the topology of the real network. However, when a fault (at a BS) appears in the network, the distance (Relation) of the faulty BS (or node) from the other neighboring BSs and the fault duration are given in the dataset. The data collection module 110A via Relation captures the impact of the fault on the neighboring BSs in a network. Relation is normalized on a scale of [0, 1]. Higher value of Relation implies closeness of the faulty BS to another BS. Typically, in a large network, service at only a few BSs (BS at fault and the BSs in the vicinity) are impacted. Each BS has a unique identifier. To analyze the impact of fault on the average data rate of UE, various network parameters are collected by the data collection module 110A on an hourly basis at each BS. The machine learning module 110B predict the average data rate of a UE based on the network parameters in the network. The focus is on to analyse the impact of fault on UE performance (data rate) in a network. The machine learning module 110B utilizes time series forecasting models to make the predictions using the historical time-stamped data. The straightforward approach is to select appropriate time series forecasting model and train the model. Then, input the test data to get the prediction. The machine learning module 110B preferably utilizes statistical model Seasonal Auto-Regressive Integrated Moving Average with exogenous factors (SARIMAX) due to seasonality of the data and also recurrent neural network model Long Short-Term Memory (LSTM) capable of learning long-term dependencies in sequential data. The prioritization module 110C classifies the faults based on severity and help the operator to prioritize the UEs to be addressed. The status of the data rate change is measured on an hourly basis. Based on data rate change, the information about the impact of fault on the user services is utilized to decide which fault should be handled in priority. By calculating change in data rate of the UE connected to the faulty BS based on the predicted average data rate, the change in data rate is calculated for each hour and quality of service (QoS) is maintained by assessing the per hour change in data rate wherein, if the change in data rate indicates increase in average data rate of the UE, QoS is not affected hence operator need not to take any action. However, if the change in data rate indicates decrease in average data rate of the UE, the prioritization module 110C prioritize the UE for trouble-shooting the decreased average data rate based on plurality of network parameters affecting the faulty BS. The memory 102 further includes a plurality of modules (not shown here) comprises programs or coded instructions that supplement applications or functions performed by the system 100 for executing different steps involved in the data rate prediction and prioritization. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by one or more hardware processors 104, or by a combination thereof. The plurality of modules can include various sub-modules (not shown).

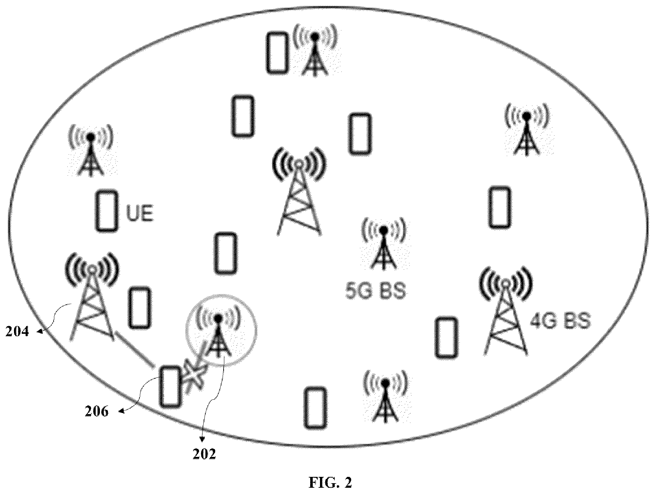

FIG. 2 is a diagram that illustrates an example of a practical scenario with 4G and 5G BSs deployed in a region of interest, according to some embodiments of the present disclosure.

Referring to FIG. 2, there is shown a scenario wherein BSs with 4G capability and the base stations with 5G capability are deployed in a region of interest. The BSs in the region of interest are managed by the system 100 to provide seamless QoS to the users. Each BS has a server to predict the impact of fault on average data rate of UE. The deployment of 4G and 5G base stations forms a heterogeneous network deployed by the operator/ service provider where multiple BSs provide multiple layers of coverage (due to co-existence of 4G and 5G and multiple frequency bands). A user can be associated with one or more BSs. The service providers keep a check on the user QoS requirements such as data rate in order to satisfy the service level agreements (SLA). If a fault occurs, there is an impact on the network parameters resulting in degradation of services in that network which is referred to as the region of interest. Considering a scenario when a BS 202 is out of service due to a sudden fault, however the associated user equipment 206 can be served by migrating to neighboring BS 204 with enough resources and thus, maintain the desired QoS. In this case, the fault can be handled with low priority as services are not getting affected because of the fault and focus on other faults where the services are impacted. Thus, the resources are utilized in fixing the high priority faults, which may lead to complaints and user (subscriber) churn.

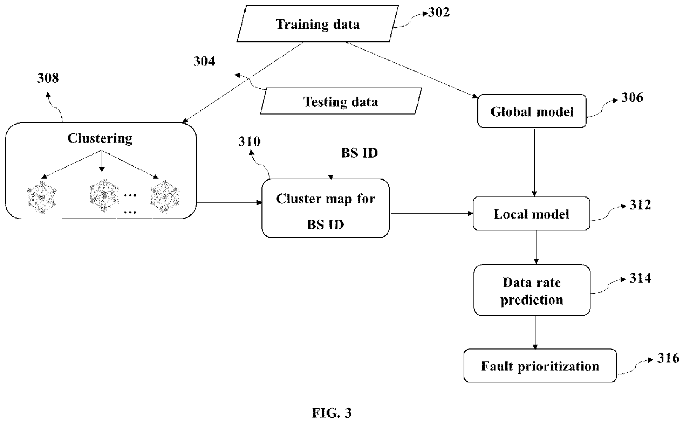

FIG. 3 is a flow diagram illustrating network fault prediction model performing fault management through prioritization, according to some embodiments of the present disclosure.

Referring to FIG. 3, network fault management is performed based on machine learning model. The machine learning framework transforms the fault management system in the next-generation from conventional equipment-centric fault management approach to service-centric approach. In one instance, the system 100 executes efficient fault management to provide seamless services with guaranteed QoS. The system 100 analyzes the impact of fault on the user services by predicting the average data rate and then utilizes the information to decide which fault should be handled in priority. The network fault management model 110 acquires a time-stamped dataset from an operator for a region of interest wherein the time-stamped dataset is collected from a plurality of base stations (BSs) of the operator servicing the region of interest, and wherein the faulty BS is one among the plurality of BSs of the region of interest. The time-stamped data is first cleaned and curated to make it suitable for machine learning (ML) model. The machine learning models utilized for processing of the curated data are time-series forecasting models, such as ARIMA, SARIMA, Simple Exponential Smoothing (SES), Deep AR, LSTM and the like. The network fault management model 110 processes the time-stamped data in a time series forecasting model to identify the data rate change at the faulty BS by utilizing (a) a global model, and (b) a local model. The global model utilizes time-stamped data for the region of interest that comprises a plurality of neighboring BS being prone to network slipup due to fault at any of the adjacent/ nearby BS. The time-stamped dataset comprises of various network parameters specific to particular BS. The network parameters comprises fault detection includes access Success Rate (ASR), resource utilization rate, timing advance (TA), block error rate (BLER), modulation and coding scheme (MCS), and channel quality indicator (CQI). The global model is trained on these network parameters captured for the entire region of interest. The network fault management model 110 further form clusters covering the faulty BS, and the neighboring BSs. The local model utilizes cluster-wise dataset specific to the cluster that comprises a plurality of neighboring BS being prone to network slipup due to fault at the faulty BS. The local model is formed by re-training the global model on the cluster-wise dataset of the cluster. The network fault management model 110 predicts the average data rate of the UE at the faulty BS serving the UE by combining the global model and the local model. The prediction of average data rate of UE involves scrutinizing network parameters affecting the average data rate of UE in the region of interest and then further zooming down by scrutinizing network parameters affecting the average data rate of UE connected to the faulty BS.

The time series forecasting model is used as the network fault prediction model 110 wherein the model is first trained on network data for performing prediction tasks. To train the network fault prediction model 110, time-stamped dataset from the heterogeneous network is obtained. The dataset comprises the values of network parameters, fault duration (in seconds) and the distance of a faulty BS from the neighboring BSs which is termed as Relation on an hourly basis from a deployed network. The complete dataset is split into two sets: (a) training data 302 to train the model, and (b) test data 304 to test the efficacy of the time series forecasting based on the network fault prediction model 110 model. Before segregating the dataset, data is pre-processed to transform the raw data collected from the real network to the machine learning model compatible format so as to be fed into the framework. Training data 302 and test data 304 are not provided with the explicit knowledge of the topology of the real network. However, when a fault (at a BS) appears in the network, the distance (Relation) of the faulty BS (or node) from the other neighboring BSs and the fault duration are given in the dataset. To analyze the impact of fault on the average data rate of UE, various network parameters are collected on an hourly basis at each BS. The various network parameters are collected at the BSs for the associated UEs to establish a benchmark to measure the efficiency and stability of the wireless network.

To analyse the impact of fault on average data rate, network parameters are monitored to proactively handle the faults efficiently in the wireless network. The machine learning framework predicts the average data rate of the UE based on the network parameters, if a fault has occurred in the network as stated in Eq. (1) below:

$$\hat{d}_i(\text{t})= h(x_{i1}, x_{i2}, \ldots\ldots, x_{in} \,|f_i)\, s.\,t.\, f_i \neq 0 \qquad\qquad (1)$$

where $f_i$ denotes the fault duration at $BS_i$, $h(.|f_i)$ is the learning function conditioned on fault duration of BS i. The network parameters are represented by $x_{in}$ are given as input to the learning framework to predict average data rate $\hat{d}_i$ at BSi for a UE. The above equation (1) represents a combined model comprising global model as well as local model.

The parameters correspond to a particular UE associated with BS i. The training data 302 is used for two purposes: a) It is fed back to the ML model (eg. LSTM or SARIMAX) to learn, draw inferences and find patterns so as to make accurate predictions. b) Determine cluster map 310 for the faulty BS, i.e., the set of neighboring BSs for which services get affected. Clustering 308 is done by segregating the faulty BS and the neighboring BSs together in the region of interest to form a cluster. The neighboring BSs performs load sharing with the faulty BS in routine scenarios and are prone to be affected due to the fault, if arises in one of the BS of the cluster. Clustering 308 utilizes training data 302 to form cluster map 310 for BS ID. Further, from the training data 302 global model 306 is obtained. Testing data 304 is used for validation purpose to check the accuracy of the proposed solution. Typically, the topology does not change so often in a deployed network. Therefore, cluster map 310 for a BS remains unchanged. In testing phase, the cluster map 310 are extracted for the BS ID for which predictions are to be made. BS ID is unique and is assigned to each base station. Then, the global model 306 is further retrained with the data corresponding to BSs in cluster map 310. This retraining on local information serves the purpose of taking the local patterns of the fault into account while making predictions. The local model 312 is thus obtained by re-training the global model 306 on the local information specific to the cluster. The combined model capable of making predictions based on network pattern identification of the region of interest via global model 306 and cluster via local model 312 predicts the average data rate 314. Based on the average data rate 314, fault prioritization 316 is done. The faults are classified into low or high priority considering the impact on UEs associated to a BS. If there is no change in the average data rate or it increases, QoS is not affected and hence such faults are categorized as low priority. If the change in the average data rate indicates decrease in average data rate of the UE, such UE is prioritized for trouble-shooting the decreased average data rate based on plurality of network parameters affecting the faulty BS.

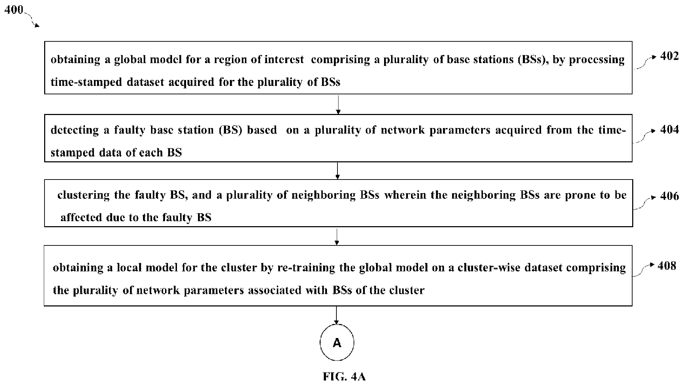

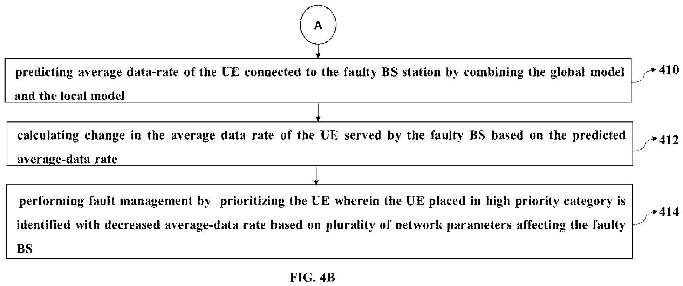

FIG. 4 is a flow diagram of an illustrative method 400 for fault management by predicting average data rate at the faulty base station, according to some embodiments of the present disclosure.

The steps of method 400 of the present disclosure will now be explained with reference to the components or blocks of the system 100 as depicted in FIG. 1 through FIG. 7. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. The system 100 enables the autonomous self-organizing networks to directly fix the service quality of users by analyzing the impact of faults instead of individually fixing the equipment in the network. In order to facilitate the desired transformation, the proposed framework first predicts the impact of the fault on the average data rate of users in the network and average based on the predicted average data rate, the faults are further classified into high or low priority fault. However, the existing solutions simply focus on detecting the fault which lacks the analysis required to address the issue of handling the efficient utilization of limited resources and consider the service quality of users while making the decision of fault management. At step 402 of the method 400, the one or more hardware processors 104 are configured to obtain a global model for a region of interest via machine learning module 110B. The region of interest comprises a plurality of base stations (BSs), wherein the global model is generated by a time series forecasting ML model (like SARIMAX, LSTM, ARIMA, SARIMA, DEEP AR) by processing time-stamped dataset acquired for the plurality of BSs. The data collection module 110C performs time-stamped dataset collection from the plurality of BSs serving the region of interest. The time series forecasting models make the predictions using the historical time-stamped data. The time-stamped data once received from the plurality of BSs, is taken through pre-processing phase to transform the raw data collected from the real network to a machine learning model compatible format so as to be fed into the machine learning framework. Mostly the machine learning models consider the input data in a particular format. In this phase, the compatibility of the data by removing the corrupted data, or missing values is ensured. This phase may require normalization of the data to meet the model requirements. In the conventional approach, an appropriate time series forecasting model is selected and trained to predict the average data rate. However, in the present disclosure, a statistical model, Seasonal Auto-Regressive Integrated Moving Average with exogenous factors (SARIMAX) is considered due to seasonality of the data. Further, a recurrent neural network model, Long Short-Term Memory (LSTM) is considered due to its capability of learning long-term dependencies in sequential data. When the data is indexed in a form where the data points are the magnitude of changes occurring with time, that data can be considered as the time-series data. And such data is suitable for forecasting by making predictions and forecast the values to fulfil the future aspects. The statistical models such as AR, MA, ARIMA, SARIMA, VAR, SARIMAX etc. are found suitable for time-series data analysis and predictions. The present disclosure utilizes SARIMAX model. This model takes into account exogenous variables, or in other words, use external data in the forecast. The exogenous factors are modeled in the model forecast. LSTM networks are a type of recurrent neural network capable of learning order dependence in sequence prediction problems. LSTMs are capable of learning and using long term dependencies. LSTM units have a cell, an input gate, an output gate and a forget gate. The cells remember information over arbitrary time intervals and the three gates regulate the flow of information into an out of the cell. They can be used for text analysis, speech recognition, language modulation, time series analysis and many other applications. LSTMs can be used for time series analysis where they look at time series data and learn to make predictions from them. The LSTMs take in multiple rows of data as a subset and then learn from that in every step. These variants of RNNs have proven to be better learners and capture time related trends much better than most of its counterparts. According to an embodiment of the present disclosure, the LSTM model consists of two layers of LSTM cells. The first layer comprises 54 units and is set to return sequences, enabling the model to capture temporal patterns comprehensively. The second LSTM layer with 72 units follows, further refining the learned representations. A dropout layer with a dropout rate of 0.2 is introduced to prevent overfitting by randomly setting a fraction of input units to zero during training. The final layer is a dense layer with a single unit, responsible for predicting the average data rate. The model uses adam optimizer and the loss function considered is the mean absolute error (MAE). The SARIMAX and LSTM found to be efficient enough to make accurate prediction of average data rate at the BS serving the plurality of UEs connected to the BS. At step 404 of method 400, the one or more hardware processors 104 are configured to detect a faulty base station (BS) from among the plurality of BSs based on a plurality of network parameters acquired from the time-stamped data of each BS, wherein at least one user equipment (UE) is connected to the faulty BS. Each BS has a unique identifier. To analyze the impact of fault on the average data rate of UE, various network parameters are collected on an hourly basis at each BS. The list of network parameters collected from a Radio Access Network (RAN) to analyze fault in a wireless network are as follows:

- Access Success Rate (ASR): It is used to measure how effectively a BS is capable of providing requested services by a UE at any time and denoted in terms of percentage.
- Resource Utilization Rate: It is used to compute the fraction of available resources utilized by a UE to provide the requested services.
- Timing Advance (TA): It is used to establish the synchronization between UE and BS during uplink and downlink transmission.
- Block Error Rate (BLER): It is defined as the rate of loss of data or erroneous bits received by a UE due to poor channel quality, interference or other reasons. Typically, BLER threshold is defined by service providers and is less than 10%. Modulation and Coding Scheme (MCS): This represents the number of bits transmitted per unit time per frequency of resources. It plays a vital role in data rate and throughput of a UE. Orthogonal Frequency division scheme is a MCS widely used in 5G wireless network.
- Channel Quality Indicator (CQI): As the name suggests, CQI indicates the channel quality between a BS and the associated UE, with a scalar value in the range [1, 15]. The CQI value provides information about the highest modulation scheme and the code rate (MCS) suitable for the downlink transmission to achieve the required BLER for given channel conditions. The higher the CQI value, better the channel quality.
- Average Data Rate: It is defined as the number of bits received by a UE in per unit time (in general, seconds), measured in Megabits per second (Mbps). Average data rate represents the transmission rate of the information between BS and UE.

Based on abnormality or a deviation from the normal values of above-mentioned network parameters, faulty BS is identified among the plurality of BSs within a region. At step 406 of the method 400, the one or more hardware processors 104 are configured to cluster the faulty BS, and a plurality of neighboring BSs from among the plurality of BSs to form a cluster, and wherein the neighboring BSs performing load sharing with the faulty BS are prone to be affected due to the faulty BS. Clustering is done by segregating the faulty BS and the neighboring BSs together in the region of interest to form a cluster. The neighboring BSs performs load sharing with the faulty BS in routine scenarios and are prone to be affected due to the fault, if arises in one of the BS of the cluster. All the BSs are segregated into clusters comprising a sub-set of the plurality of BSs falling within the region of interest. The clustering is performed in accordance with the algorithm given below:

---

**Algorithm 1** Cluster Formation

---

Input: **BS ID** $i$, Dataset $D$
**Output**: Cluster $Set\ C_i$
List of timestamps $T_i$ s.t. $f_i > 0$ from $D$
Compute $k = size\ (T_i)$
Initialize $[L] \longleftarrow NULL$
  For $j = 1: k$ **do**
    $t = T_i\ (j)$
    List of BS **M** s.t. $\{(f_m > 0)\&\&(d_m > 0)\}\ \forall_m\ \varepsilon\ M\}$
    Set $Y_j = M$
    Set $[L] \leftarrow \{L, Y_j\}$
  **end**
  Get $Y_1, Y_{2,\dots\dots}\ Y_k\ from\ L$

Compute Cluster of BS $i$ $C_i = Y_1 \cap Y_2 \cap \dots \cap Y_k$

---

The algorithm takes BS ID i for which the cluster is needed along with the data set D. First step is to find the list of time-stamps $T_i$ when the fault has occurred at BS i i.e., fault duration $f_i > 0$. For each time-stamp, determine the BSs (in M) which are impacted with the fault at BS i. In expression $\{(f_m > 0)\ \&\&\ (d_{im} > 0)\}$, first term signifies that BS m has an impact of a fault and second term represents vicinity of BS m with BS i. In case of more than one faults in the network, second term identifies neighborhood of BS i. Last statement computes the cluster of BS i $C_i$ by taking common BSs from each time-stamp of $BS_i$. At step 408 of the method 400, the one or more hardware processors 104 are configured to obtain a local model for the cluster by re-training the global model on a cluster-wise dataset comprising the plurality of network parameters associated with BSs of the cluster. The global model obtained at step 402 is further retrained with the data corresponding to BSs in cluster map. This retraining on local information serves the purpose of taking the local patterns of the fault into account while making predictions. The local model is thus obtained by re-training the global model on the local information specific to the cluster. At step 410 of the method 400, the one or more hardware processors 104 are configured to predict average data rate of the UE connected to the faulty BS station by combining the global model and the local model, wherein the combined model scrutinize one or more network parameters from among the plurality of network parameters affecting the average data rate of UE in the region of interest to the faulty BS. The combined model capable of making predictions based on network pattern identification of the region of interest via global model and cluster via local model predicts the average data rate. At step 412 of the method 400, the one or more hardware processors 104 are configured to calculate change in the average data rate of the UE served by the faulty BS based on the predicted average data rate, wherein the change in average data rate is calculated each predefined time interval of a fault duration. The machine learning module 110B predicts the average data rate as an output to the combined model. Based on the predicted average data rate obtained from the present disclosure, status of the average data rate change for each hour of the fault duration is defined. The status of the average data rate of UE at a BS wherein S is defined in terms of average data rate change $\Delta$ caused by the fault. Let $b_i^d$ and $d_i^b$ are average data rates before and after the fault is observed, respectively. The average data rate change is defined as $\Delta = d_i^a - d_i^b$. Thus, $\Delta$ can be a positive or a negative value. $\Delta < 0$ implies that average data rate before the fault is greater than that of the average data rate after the fault i.e., $d_i^b > d_i^a$. Likewise, $\Delta > 0$ implies $d_i^b < d_i^a$, which is a possibility if the UE migrates to a neighboring BS for service.

$$S = \begin{cases} 1, & \Delta < 0 \\ 0, & \Delta < 0 \end{cases} \qquad (2)$$

Hence, the state is labelled as '1' if $\Delta < 0$, else, '0'. In ML models, F1-score is a performance metric used for classification. F1-score lies in the interval (0, 1) and F1-score closer to one indicates model predictions are accurate. This metric has been utilized to classify the faults as Low priority and High priority. The high priority faults need to be addressed with urgency, as they impact the UE data rate. F1-score is given as:

$$F1 = \frac{2\,P.R}{P+R} \qquad (3)$$

where, P and R denote the precision and recall, respectively. Precision and recall are defined as follows:

$$P = \frac{T_p}{T_p + F_p} \qquad R = \frac{T_p}{T_p + F_n} \qquad (4)$$

where $T_p$, $F_p$ and $F_n$ represent the number of true positives, the number of false positives and the number of false negatives.

At step 414 of the method 400, the one or more hardware processors 104 are configured to perform fault management by prioritizing the UE from a high priority category to a low priority category, wherein the UE placed in high priority category is identified with decreased average data rate (and thus degrading QoS to the user) based on plurality of network parameters affecting the faulty BS. The prioritization module 110C classifies the faults based on severity and help the operator to prioritize the UEs to be addressed. The status of the average data rate change is measured for each hour of the fault duration. Based on average data rate change, the information about the impact of fault on the user services is utilized to decide which fault should be handled in priority. By calculating change in average data rate of the UE connected to the faulty BS based on the predicted average data rate, the change in average data rate is calculated each hour of the fault duration. The prioritization module 110C executes average data rate prediction when fault occurs in the network and performs classification of faults into low or high priority category. Based on the information of impact of fault. When the data collection module collects the information from the network, this information is processed by the machine learning module 110B to obtain the desired data for further processing. Based on the analysis, decision of efficient utilization of the available resources for operation and maintenance (O&M) is taken by the prioritization module 110C. The goal of fault management in telecom O&M is to ensure stable & reliable networks and services. In the RAN, the most significant part of O&M activities is network fault management, including fault monitoring, analysis, diagnosis, and repair processes. Among these processes, fault analysis is an essential part of troubleshooting. Therefore, the system 100 essentially takes acre of the fault analysis by accurately identifying the fault and prioritizing the resources to provide seamless network experience to the user.

USE CASE-I:

IDENTIFICATION OF NETWORK FAULTS AT THE BASE STATION

A system, and a method of identifying network faults at the base station serving the UE in the region of interest is presented. An example scenario depicting the method of identifying network fault based on historical data collected from the region of interest performed by the disclosed system 100 for base station from which the UE is connected and experiencing decreased data rate due to the fault occurred to the base station. Typically, there are limited resources available for O&M of a network to a service provider which should be utilized efficiently in order to manage the faults such that the service quality remains uninterrupted or unaffected to users. The present disclosure predicts the average data rate of users in case a fault occurs in the network. Thus, the solution provides an insight to handle the faults based on the priority of impact. Both consumers (users) and service providers/ operators can benefit using the disclosed machine learning framework. The data set has been sourced from International Telecommunication Union (ITU) AI/ML in 5G Challenge 2023 to perform the experiments. The data is collected over the time period of "09-02-2023 03:00:00" to "02-03-2023 00:00:00". The heterogeneous network deployed consists of more than 500 4G and 5G BSs. A data set comprises the values of network parameters, fault duration (in seconds) and the distance of a faulty BS from the neighboring BSs which is termed as Relation on an hourly basis from a deployed network. The complete dataset is split into two sets : one to train the model and the other set to test the efficacy of the proposed machine learning model. The data set does not provide the explicit knowledge of the topology of the real network. However, when a fault (at a BS) appears in the network, the distance (Relation) of the faulty BS (or node) from the other neighboring BSs and the fault duration are given in the dataset. Relation captures the impact of the fault on the neighboring BSs in a network. Relation is normalized on a scale of [0, 1]. Higher value of Relation implies closeness of the faulty BS to another BS. Typically, in a large network, service at only a few BSs (BS at fault and the BSs in the vicinity) are impacted. Primarily, the migration of users to neighboring BSs results in degradation of services offered when enough resources are not available. Each BS has a unique identifier. To analyze the impact of fault on the average data rate of UE, various network parameters are collected on an hourly basis at each BS. The network parameters collected from the RAN to analyze the impact of fault in a wireless network include ASR, resource utilization rate, TA, BLER, MCS and CQI.

Table I, illustrates the data with four time-stamps for BS with ID 72. The four rows correspond to four hours of data on a particular day. Time indicates the beginning of an hour, for instance 0:00 implies the duration of 0:00-1:00 hour of the day. The fault duration is given in seconds in that particular time slot of an hour. Relation value zero implies that there is no fault at the BS or in the vicinity. Hence, relation and fault duration both are zero. This indicates relation and variation of network parameters when fault is not observed in the deployed network. In Table II, the fault occurred at a neighboring BS in 7:00 and 8:00 time duration, and the distance between BS with ID 72 and the faulty node is relatively less as denoted by relation value 0.8. As the faulty BS is quite close, the ASR degraded significantly may be due to migration of user from the faulty node. With the overloaded BS ID 72, the Resource Utilization Rate goes up to 100%, resulting in shortage of resources to serve the users associated to the BS. This provides an overview of the impact of faults on the neighboring BSs that is the how the fault effect the services on the BSs in the vicinity. From Table III, we observe that the fault has occurred at BS itself, hence the relation value is set to one. Due to the fault, the ASR and resource utilization rate goes to zero and BS is not capable to serve any of the users. This indicates the impact of fault on the network parameters and interrelation among them.

Table-I

| BS ID | Time | Access success rate | Resource utilization rate | TA | BLER | CQI | MCS | Average Data rate | Fault duration | Relation |
|---|---|---|---|---|---|---|---|---|---|---|
| 72 | 0.00 | 99.49 | 16.03 | 0.55 | 32.12 | 13.75 | 13.41 | 22.01 | 0 | 0 |
| 72 | 1.00 | 99.79 | 17.59 | 0.72 | 12.45 | 17.46 | 15.32 | 31.99 | 0 | 0 |
| 72 | 2.00 | 99.62 | 17.23 | 0.70 | 6.92 | 16.21 | 15.15 | 33.15 | 0 | 0 |
| 72 | 3.00 | 99.89 | 16.46 | 0.67 | 9.16 | 16.73 | 15.26 | 37.96 | 0 | 0 |

Table-II

| BS ID | Time | Access success rate | Resource utilization rate | TA | BLER | CQI | MCS | Average Data rate | Fault duration | Relation |
|---|---|---|---|---|---|---|---|---|---|---|
| 72 | 5.00 | 99.95 | 14.14 | 0.63 | 49.12 | 22.24 | 13.41 | 8.46 | 0 | 0 |
| 72 | 6.00 | 99.93 | 14.26 | 0.86 | 77.00 | 19.34 | 12.16 | 6.47 | 0 | 0 |
| 72 | 7.00 | 99.75 | 16.36 | 0.73 | 82.04 | 15.08 | 10.74 | 15.25 | 255 | 0.8 |
| 72 | 8.00 | 11.45 | 100 | 0.72 | 14.80 | 14.34 | 20.85 | 5.74 | 3600 | 0.8 |

Table-III

| BS ID | Time | Access success rate | Resource utilization rate | TA | BLER | CQI | MCS | Average Data rate | Fault duration | Relation |
|---|---|---|---|---|---|---|---|---|---|---|
| 72 | 16:00 | 9.49 | 99.58 | 0.89 | 16.94 | 16.00 | 31.41 | 14.93 | 0 | 0 |
| 72 | 17:00 | 11.69 | 99.95 | 0.86 | 10.09 | 11.64 | 19.16 | 38.99 | 0 | 0 |
| 72 | 18:00 | 0 | 0 | 0.73 | 1.27 | 0 | 0 | 0 | 2555 | 1 |
| 72 | 19:00 | 0 | 0 | 0 | 0 | 0 | 0 | 0 | 3600 | 1 |

From the above illustrated data mentioned in the Tables I, II and III, correlation among the network parameters have been observed resulting in the impact on the QoS of the users associated. In addition, the impact of fault on the network parameters of the faulty and the neighboring BSs is also observed. Therefore, it is clear from the above case that it is essential to consider the local information while making predictions in the network for fault management.

EFFICIENCY OF THE TIME SERIES FORECASTING MODEL COUPLED WITH CLUSTERING ALGORITHM: THE COMBINED MODEL

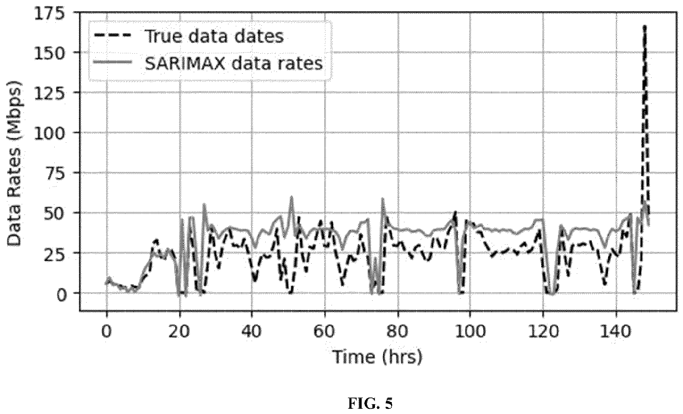

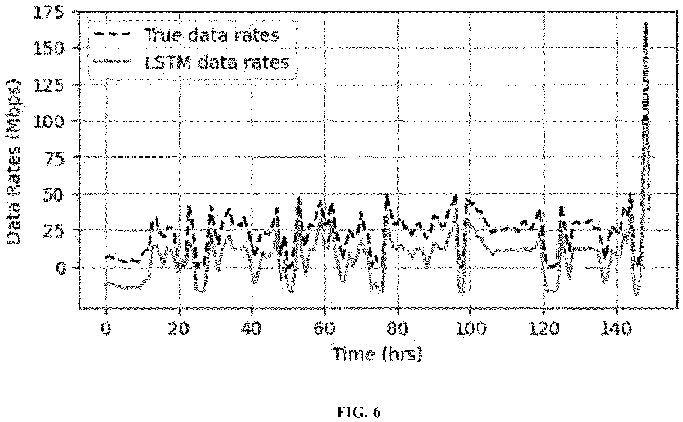

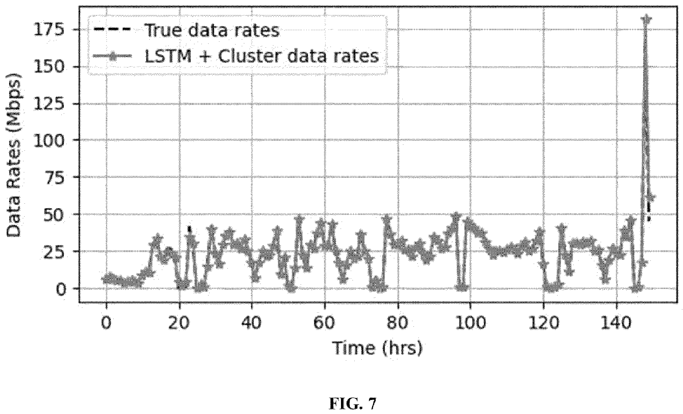

The present disclosure provides more accurate prediction of the average data rate from the time series forecasting model coupled with the clustering algorithm. The system 100 utilizes the time series forecasting model to make average data rate prediction of the UE at the faulty BS which considers network parameters of the entire region of interest. This results into a global model of the network parameter information of the region of interest that has an impact on average data rate at the faulty BS. This information is further refined by clustering the BSs such that a cluster is formed by including the faulty BS as well as other neighboring BSs lying in the vicinity of the BS. The fault in one BS has an impact on the network parameters of the neighboring BS. With the clustering a local model is obtained by re-training the global model on the network parameters of the BSs lying in the cluster. This resulted into more refined and accurate prediction. A comparative study is presented to showcase the predicted average data rate with the true (actual) data rate for the scenarios when different time series forecasting models are used alone and when the time series forecasting models are coupled with the clustering. FIG. 5 demonstrates the comparison of predicted average data rate for the time series model SARIMAX with that of true average data rate for the test data. It has been observed that SARIMAX could not capture the pattern of the data rate efficiently. The data rate pattern obtained from SARIMAX is non-overlapping to the true average data rate patterns with significantly distinct peaks as compared to the true average data rate. Further, another time series forecasting model, LSTM is utilized for predicting the data rate. FIG. 6 demonstrates the comparison of predicted average data rate for the LSTM with that of true average data rate for the test data. It has been observed that LSTM resulted into better prediction as compared to the SARIMAX. However, LSTM predictions lag with a slight gap between predicted average data rate and true average data rate. Further, LSTM is coupled with the clustering in the form of the combined model comprising global model and the local model as per the present disclosure is tested to compare the predicted average data rate and the true average data rate. FIG. 7 demonstrates the performance of the combined model that includes LSTM along with clustering. It has been clearly seen from the FIG. 7 that the predicted average data rate aligns with the actual data rate values. The performance highlights the importance of the local information (topology or nearby BSs) while making predictions in a wireless network. The clustering enhances the data rate prediction performance by considering the nearby BSs and further fine-tuning the data rate prediction. Comparison of F1-Scores of all the above comparisons are presented below in Table-IV. The Network fault management model (combined model) clearly outperformed the predictions made individually by SARIMAX or LSTM and resulted into significant accuracy depicted with a F1 score of 95.6%.

Table-IV

| Model | F1 scores |
|---|---|
| SARIMAX | 69.5% |
| LSTM | 80.5% |
| Network fault management model (Combined model) | 95.6% |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein addresses unresolved problem of network fault management by predicting average data rate at the faulty base station. The disclosed network fault management model predicts the data rate of UE at the base station in case a fault occurs in the network. Thus, the solution provides an insight to handle the faults based on the priority of impact. Both consumers (users) and service providers can benefit using the network fault management framework. The present disclosure focuses to transform the O&M of the next-generation networks from equipment-centric to service centric. This enhancement leverage the autonomous self-organizing networks to directly fix the service quality of users by analyzing the impact of faults instead of individually fixing the equipment in the network. In order to facilitate the desired transformation, the disclosed network fault prediction model first predicts the impact of the fault on the data rate of users in the network and based on the predicted average data rate, the faults are further classified into high or low priority fault. Therefore, the present disclosure emphasize on service-centric fault management. The network fault management model captures the local and global network topology to analyze the impact of faults by predicting the data rate of users.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method for network fault management at base stations (BSs), the method comprising:

obtaining (402), via one or more hardware processors, a global model for a region of interest comprising a plurality of base stations (BSs), wherein the global model is generated by a time series forecasting model by processing time-stamped dataset acquired for the plurality of BSs;
detecting (404), via the one or more hardware processors, a faulty base station (BS) from among the plurality of BSs based on a plurality of network parameters acquired from the time-stamped data of each BS, wherein at least one user equipment (UE) is connected to the faulty BS;
clustering (406), via the one or more hardware processors, the faulty BS, and a plurality of neighboring BSs from among the plurality of BSs to form a cluster, and wherein the neighboring BSs performing load sharing with the faulty BS are prone to be affected due to the faulty BS;
obtaining (408), via the one or more hardware processors, a local model for the cluster by re-training the global model on a cluster-wise dataset comprising the plurality of network parameters associated with BSs of the cluster;
predicting (410), via the one or more hardware processors, average data rate of the UE connected to the faulty BS station by combining the global model and the local model, wherein the combined model scrutinizes one or more network parameters from among the plurality of network parameters affecting the average data rate of UE in the cluster comprising the faulty BS;

calculating (412), via the one or more hardware processors, change in the average data rate of the at least one UE served by the faulty BS based on the predicted average data rate, wherein the change in average data rate is calculated each predefined time interval of a fault duration; and

performing (414), via the one or more hardware processors, fault management by prioritizing the at least one UE from a high priority category to a low priority category, wherein a UE placed in high priority category is identified with decreased average data rate based on plurality of network parameters affecting the faulty BS.

2. The method as claimed in claim 1, wherein the plurality of network parameters involved in the fault detection comprises access Success Rate (ASR), resource utilization rate, timing advance (TA), block error rate (BLER), modulation and coding scheme (MCS), and channel quality indicator (CQI).

3. The method as claimed in claim 1, wherein the average data rate of the UE is calculated by the combined model that functions in accordance with the equation:

$$\hat{d}_i(\text{t}) = h(x_{i1}, x_{i2}, \ldots\ldots, x_{in} \mid f_i)\, s.\,t.\, f_i \neq 0$$

wherein $f_i$ denotes the fault duration at BS $i$, $h(.\mid f_i)$ is the learning function conditioned on fault duration of BS i, wherein the network parameters are represented by $x_{in}$ are given as input to the learning framework to predict data rate $\hat{d}_i$ at BS $i$ for a UE.

4. The method as claimed in claim 1, wherein the time series forecasting models is coupled with clustering algorithm to obtain the combined model.

5. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain a global model for a region of interest comprising a plurality of base stations (BSs), wherein the global model is generated by a time series forecasting model by processing time-stamped dataset acquired for the plurality of BSs;

detect a faulty base station (BS) from among the plurality of BSs based on a plurality of network parameters acquired from the time-stamped data of each BS, wherein at least one user equipment (UE) is connected to the faulty BS;

cluster the faulty BS, and a plurality of neighboring BSs from among the plurality of BSs to form a cluster, and wherein the neighboring BSs performing load sharing with the faulty BS are prone to be affected due to the faulty BS;

obtain a local model for the cluster by re-training the global model on a cluster-wise dataset comprising the plurality of network parameters associated with BSs of the cluster;

predict average data rate of the UE connected to the faulty BS station by combining the global model and the local model, wherein the combined model scrutinizes one or more network parameters from among the plurality of network parameters affecting the average data rate of UE in the cluster comprising the faulty BS;

calculate change in the average data rate of the at least one UE served by the faulty BS based on the predicted average data rate, wherein the change in average data rate is calculated each predefined time interval of a fault duration; and

perform fault management by prioritizing the at least one UE from a high priority category to a low priority category, wherein a UE placed in high priority category is identified with decreased average data rate based on plurality of network parameters affecting the faulty BS.

6. The system as claimed in claim 5, wherein the plurality of network parameters involved in the fault detection comprises access Success Rate (ASR), resource utilization rate, timing advance (TA), block error rate (BLER), modulation and coding scheme (MCS), and channel quality indicator (CQI).

7. The system as claimed in claim 5, wherein the average data rate of the UE is calculated by the combined model that functions in accordance with the equation:

$$\hat{d}_i(\mathrm{t}) = h(x_{i1}, x_{i2}, \ldots\ldots, x_{in} \mid f_i) s.t. f_i \neq 0$$

wherein $f_i$ denotes the fault duration at BS $i$, $h(.|f_i)$ is the learning function conditioned on fault duration of BS $i$, wherein the network parameters are represented by $x_{in}$ are given as input to the learning framework to predict data rate $\hat{d}_i$ at BS $i$ for a UE.

8. The system as claimed in claim 5, wherein the time series forecasting models is coupled with clustering algorithm to obtain the combined model.

9. One or more non-transitory machine-readable information storage mediums comprising one or more instructions which when executed by one or more hardware processors cause:

obtaining a global model for a region of interest comprising a plurality of base stations (BSs), wherein the global model is generated by a time series forecasting model by processing time-stamped dataset acquired for the plurality of BSs;

detecting a faulty base station (BS) from among the plurality of BSs based on a plurality of network parameters acquired from the time-stamped data of each BS, wherein at least one user equipment (UE) is connected to the faulty BS;

clustering the faulty BS, and a plurality of neighboring BSs from among the plurality of BSs to form a cluster, and wherein the neighboring BSs performing load sharing with the faulty BS are prone to be affected due to the faulty BS;

obtaining a local model for the cluster by re-training the global model on a cluster-wise dataset comprising the plurality of network parameters associated with BSs of the cluster;

predicting average data rate of the UE connected to the faulty BS station by combining the global model and the local model, wherein the combined model scrutinizes one or more network parameters from among the plurality of network parameters affecting the average data rate of UE in the cluster comprising the faulty BS;

calculating change in the average data rate of the at least one UE served by the faulty BS based on the predicted average data rate, wherein the change in average data rate is calculated each predefined time interval of a fault duration; and

performing fault management by prioritizing the at least one UE from a high priority category to a low priority category, wherein a UE placed in high priority category is identified with decreased average data rate based on plurality of network parameters affecting the faulty BS.

10. The one or more non-transitory machine-readable information storage mediums as claimed in claim 9, wherein the plurality of network parameters involved in the fault detection comprises access Success Rate (ASR), resource utilization rate, timing advance (TA), block error rate (BLER), modulation and coding scheme (MCS), and channel quality indicator (CQI).

11. The one or more non-transitory machine-readable information storage mediums as claimed in claim 9, wherein the average data rate of the UE is calculated by the combined model that functions in accordance with the equation:

$$\hat{d}_i(\mathrm{t}) = h(x_{i1}, x_{i2}, \ldots\ldots, x_{in} \mid f_i) s.t. f_i \neq 0$$

wherein $f_i$ denotes the fault duration at BS $i$, $h(.|f_i)$ is the learning function conditioned on fault duration of BS $i$, wherein the network parameters are represented by $x_{in}$ are given as input to the learning framework to predict data rate $\hat{d}_i$ at BS $i$ for a UE.

12. The one or more non-transitory machine-readable information storage mediums as claimed in claim 9, wherein the time series forecasting models is coupled with clustering algorithm to obtain the combined model.

System **100**

Processors(s) **104**

I/O Interface(s) **106**

Database **108**

Cloud server 116

Memory **102**

NETWORK FAULT MANAGEMENT
MODEL 110

Data collection module 110A

Machine learning module 110B

Prioritization module 110C

FIG. 1

FIG. 2

FIG. 3

400

| obtaining a global model for a region of interest comprising a plurality of base stations (BSs), by processing time-stamped dataset acquired for the plurality of BSs | → 402 |

| detecting a faulty base station (BS) based on a plurality of network parameters acquired from the time-stamped data of each BS | → 404 |

| clustering the faulty BS, and a plurality of neighboring BSs wherein the neighboring BSs are prone to be affected due to the faulty BS | → 406 |

| obtaining a local model for the cluster by re-training the global model on a cluster-wise dataset comprising the plurality of network parameters associated with BSs of the cluster | → 408 |

( A )

FIG. 4A

A

predicting average data-rate of the UE connected to the faulty BS station by combining the global model and the local model ⟋▸410

calculating change in the average data rate of the UE served by the faulty BS based on the predicted average-data rate ⟋▸412

performing fault management by prioritizing the UE wherein the UE placed in high priority category is identified with decreased average-data rate based on plurality of network parameters affecting the faulty BS ▸414

FIG. 4B

FIG. 5

**FIG. 6**

**FIG. 7**

Europäisches
Patentamt
European
Patent Office
Office européen
des brevets

# EUROPEAN SEARCH REPORT

**Application Number**

EP 25 17 2868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAVRATI SAXENA ET AL: "Intelligent Ranking for Dynamic Restoration in Next Generation Wireless Networks", ARXIV.ORG, CORNELL UNIVERSITY LIBRARY, 201 OLIN LIBRARY CORNELL UNIVERSITY ITHACA, NY 14853, 10 September 2020 (2020-09-10), XP081760205, * sections II-V * ----- | 1-12 | INV. H04W24/04 G06N20/00 H04L41/0631 H04L41/16 ADD. H04W24/08 H04W24/10 |
| A | GB 2 597 920 A (SPATIALBUZZ LTD [GB]) 16 February 2022 (2022-02-16) * page 5, line 25 - page 23, line 17 * ----- | 1-12 | |
| A | US 2013/051239 A1 (MEREDITH SHELDON [US] ET AL) 28 February 2013 (2013-02-28) * paragraphs [0032] - [0044], [0071] - [0086] * ----- | 1-12 | |

**TECHNICAL FIELDS SEARCHED (IPC)**

H04W
G06N
H04L

The present search report has been drawn up for all claims

| Place of search | Date of completion of the search | Examiner |
|---|---|---|
| Munich | 16 September 2025 | Davidovic, Sasa |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 17 2868

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | Publication date |
|---|---|---|---|---|
| GB 2597920 | A | 16-02-2022 | NONE | |
| US 2013051239 | A1 | 28-02-2013 | NONE | |

EPO FORM P0459

For more details about this annex : see Official Journal of the European Patent Office, No. 12/82

**EP 4 648 465 A1**

## REFERENCES CITED IN THE DESCRIPTION

**Patent documents cited in the description**

- IN 202421036174